# EUROPEAN PATENT APPLICATION

(11) **EP 1 903 429 A2**
(43) Date of publication of application: **26.03.2008**
(21) Application number: 07018486.6
(22) Date of filing: 20.09.2007
(51) Int. Cl.: G06F 3/12

(54) **Printing system, printing terminal and print service method**

(30) Priority: 25.09.2006 JP 2006259660
(71) Applicant: FUJIFILM Corporation, Minato-ku Tokyo (JP)
(72) Inventor: Nakashima, Teruyoshi, Minato-ku Tokyo (JP)
(74) Representative: Klunker, Hans-Friedrich

(57) **Abstract**

A printing system of the present invention is provided with an information communication section which transmits service information, which is information about services provided by the printing terminal (2), to the communication terminal (1a, 1b); and when receiving the service information from the information communication section (21), the communication terminal displays the service information. According to the printing system of the present invention, since the service information is transmitted from the information communication section to a user's communication terminal (1a, 1b), and the service information is displayed on the user's communication terminal of the user, it is possible to easily provide the user with contents of services different from store to store.

## Description

### BACKGROUND OF THE INVENTION

### Field of the Invention

The present invention relates to a print service for placing print order with the use of a communication terminal.

### Description of the Related Art

According to Japanese Patent Application Laid-Open No. 2004-362322, a digital camera and a printer are connected with each other, and image data acquired by the digital camera is directly printed by the printer. An operation screen for operating the printer is provided for the digital camera as UI image data. In this case, UI image data of operation screens in various languages and with various character sizes are prepared in the printer, and UI image data of an operation screen having a language and a character size corresponding to the language specification, the display screen size, and the age of the user of the digital camera is provided for the digital camera.

### SUMMARY OF THE INVENTION

The printing service provided by a point-of-sale terminal usually differs from store to store. For example, the printable print sizes and whether paper is out or not differ from store to store. When it is assumed that the printer of Japanese Patent Application Laid-Open No. 2004-362322 is used as a point-of-sale printing terminal to enable a user to place print order with his mobile terminal, there is a problem that the user cannot know information about services, such as what services are to be provided by the printing terminal, in advance. Device which displays the information about services may be provided for the printer of Japanese Patent Application Laid-Open No. 2004-362322, similarly to conventional point-of-sale printing terminals. However, it increases the cost of the point-of-sale printing terminal, and it is not appropriate as a method for solving the above problem.

The present invention has been made in consideration of this problem, and its object is to easily provide information about services different from store to store for a user without increasing the cost.

The present invention relates to a printing system including: a printing terminal provided with an image input section which accepts input of an image, an order receiving section which receives order information about order of a print of the image, a settlement section which performs settlement processing in accordance with the order information, a print data creation section which creates print data for printing the image in accordance with the order information received by the order receiving section, and a printer which creates a photo print of the image in accordance with the print data; and a communication terminal provided with an order acceptance section which accepts input of the order information, and an order transmission section which transmits the order information inputted to the order acceptance section, to the order receiving section.

This printing system is characterized by comprising an information communication section which transmits service information, which is information about services provided by the printing terminal, to the communication terminal, and wherein when receiving the service information from the information communication section, the communication terminal displays the received service information.

As described above, according to the present invention, since the service information is transmitted from the information communication section to a user's communication terminal, and the service information is displayed on the user's communication terminal of the user, it is possible to easily provide the user with contents of services different from store to store.

It is preferable that the communication terminal transmits client information including information about the standard of a user interface which accepts the input of the order information, to the information communication section; that when receiving the client information from the communication terminal, the information communication section transmits a user interface corresponding to the services provided by the printing terminal and corresponding to the client information, to the communication terminal; and that the communication terminal receives the user interface for the order information from the information communication section, and the order acceptance section accepts the input of the order information via the user interface.

Thereby, it is possible to provide the user's communication terminal with a user interface customized according to the specification of the user's communication terminal and the services different from printing terminal to printing terminal.

The information communication section may be provided for the printing terminal itself, or it may be provided for an external server independent from the printing terminal.

A printing terminal according to the present invention is characterized by comprising: a printing unit provided with an image input section which accepts input of an image, an order receiving section which receives order information about order of a print of the image from a communication terminal, a settlement section which performs settlement processing in accordance with the order information, a print data creation section which creates print data for printing the image in accordance with the order information received by the order receiving section, and a printer which creates a photo print of the image in accordance with the print data; a communication terminal provided with an order acceptance section which accepts input of the order information, and an order transmission section which transmits the order information inputted to the order acceptance section, to the order receiving section; and an information communication section which transmits service information, which is information about services provided by the printing unit, to the communication terminal.

The print service method according to the present invention includes the steps of: transmitting service information, which is information about services provided by a printing terminal, from a server to a communication terminal; and receiving the service information from the server and causing the received service information to be displayed, at the communication terminal.

According to the present invention, the service information is transmitted from the information communication section to the user's communication terminal, and the service information is displayed on the user's communication terminal. Therefore, it is possible to easily provide the user with the contents of services different from store to store.

### BRIEF DESCRIPTION OF THE DRAWINGS

Fig. 1 is a block diagram of a printing system;
Figs. 2A to 2K are diagrams illustrating transition of an order information input screen; and
Fig. 3 is a flowchart showing the flow of the processing by the printing system.

### DETAILED DESCRIPTION OF THE PREFERRED EMBODIMENTS

A preferred embodiment of the present invention will be described with reference to accompanying drawings.

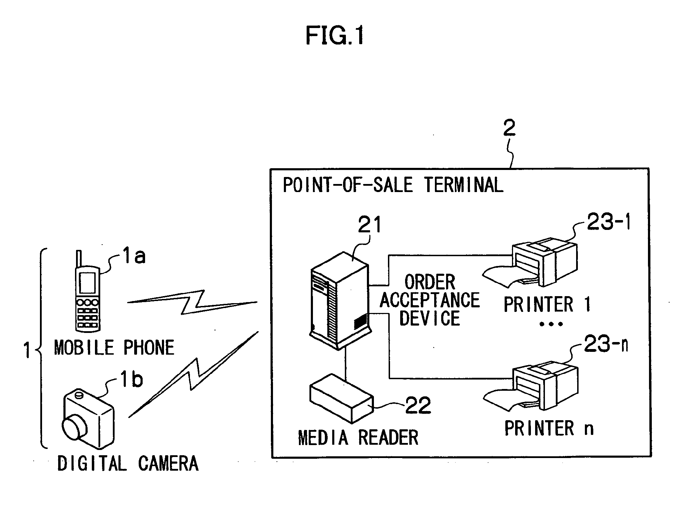

Fig. 1 is a schematic block diagram of a printing system according to a preferred embodiment of the present invention.

This system is provided with a mobile terminal 1 configured by a mobile phone 1a or a digital camera 1b, and a point-of-sale terminal 2.

The point-of-sale terminal 2 is typically installed at a store of an enterprise characterized in multi-store development, such as a convenience store and a photo service store.

The point-of-sale terminal 2 is provided with an order acceptance device 21, a media reader 22, and one or more printers 23-1 to 23-n.

The mobile terminal 1 and the order acceptance device 21 can directly send and receive data wirelessly or wiredly via communication in conformity with a predetermined standard, such as infrared communication in conformity with the IrDA standard.

The printer 23 of the point-of-sale terminal 2 has a function of printing an image obtained by image taking by the mobile phone 1a or the digital camera 1b to create a photo print. The image data indicating the image can be inputted to the order acceptance device 21 by inserting a memory card (not shown) configured to be attached to and detached from the mobile terminal 1, into the media reader 22 of the point-of-sale terminal 2. The image data may be directly sent from the mobile terminal 1 to the order acceptance device 21.

Order information indicating the contents of order of photo prints, such as how many prints of which image are to be created, a template to be synthesized with the image, and contents about processing of the image, can be inputted to the order acceptance device 21 by the mobile terminal 1 accepting input of the information and wirelessly transmitting it to the order acceptance device 21.

The order acceptance device 21 appropriately performs processing such as image synthesis and image segmentation and image processing such as color/density adjustment for the inputted image data in accordance with the order information, creates print data on the basis of the image data after the image processing and the order information, and outputs the print data to any of the printers 23 with the fewest waiting jobs.

When the print data is inputted from the order acceptance device 21, the printer 23 makes a print on a predetermined recording medium on the basis of the print data to create a photo print.

The created photo print is ejected from an ejection port not shown to the outside of the point-of-sale terminal 2, and the user can receive the finished photo print. Alternatively, the ejected photo print can be delivered to the user's address.

A screen for inputting the order information is displayed on the display screen provided for the mobile terminal 1. The user of the mobile terminal 1 creates order information in a form which can be accepted by the order acceptance device 21 by inputting instructions (commands), such as those about the print size and the number of prints, via the order information input screen with numeric keys, a cross key and the like provided for the mobile terminal 1.

The order information input screen is downloaded in advance to the mobile terminal 1 from the order acceptance device 21 or any other server via infrared communication or a mobile communication network, or it is stored in the internal storage medium in advance when the mobile terminal 1 is shipped. The program for controlling acceptance of input of the order information, creation thereof and transmission thereof to the order acceptance device 21 is written in a network-compatible language, and it is also downloaded in advance from the order acceptance device 21 or any other server.

Since the order information can be inputted to the order acceptance device 21 through the input screen displayed on the mobile terminal 1, it is not necessary to provide an input device such as a touch panel or a display device such as a monitor, and the point-of-sale terminal 2 can be configured inexpensively.

Of course, it is possible to provide only a display screen for the order acceptance device 21. In this case, the order information is not created by the mobile terminal 1. By sending an instruction to be inputted to the order information input screen, from the mobile terminal 1 to the order acceptance device 21 and displaying the contents of the instruction on the order acceptance device 21, it seems as if the order information input screen of the order acceptance device 21 were remotely operated with the use of the mobile terminal 1. In this case also, it is not necessary to provide an input acceptance device such as a touch panel, and a cost-down effect can be expected.

Service information, which is information about print services provided by each of a lot of point-of-sale terminals 2, is downloaded to the mobile terminal 1 from the order acceptance device 21 or any other server and stored in the storage medium in advance.

The server may be a particular point-of-sale terminal 2 or any other server on a network. For example, the following process is conceivable to download the service information from a sever other than the point-of-sale terminal 2. That is, when the mobile terminal 1 accesses the introduction web page of a particular point-of-sale terminal 2 to be used, via a network such as the Internet, transmission of service information is requested from a server linked to the introduction web page. In response to the request, the server sends service information specific to the point-of-sale terminal 2 specified by the introduction web page, to the mobile terminal 1 via the network.

Basically, the timing of accessing the server to acquire the service information may be any timing. However, if the user wants to obtain the latest service information, it is desirable to access it immediately before actually sending the order information to the point-of-sale terminal 2.

If one server inclusively manages the service information about the different point-of-sale terminals 2, the cost-reduction effect can be considerably increased.

For simplification of the description, the server is assumed to be a point-of-sale terminal 2 with which the mobile terminal 1 has established infrared communication. However, naturally, the mobile terminal 1 and the point-of-sale terminal 2 may be connected via a communication route other than an infrared communication route. If they are connected not via infrared communication but via a public network such as the Internet, the necessity of the user carrying the mobile terminal 1 to the point-of-sale terminal 2 is eliminated advantageously.

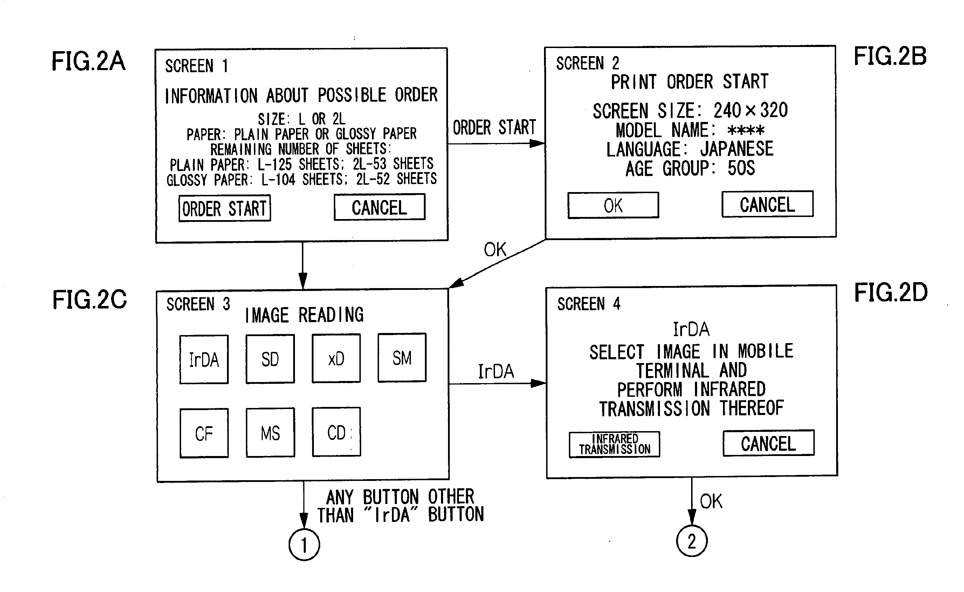

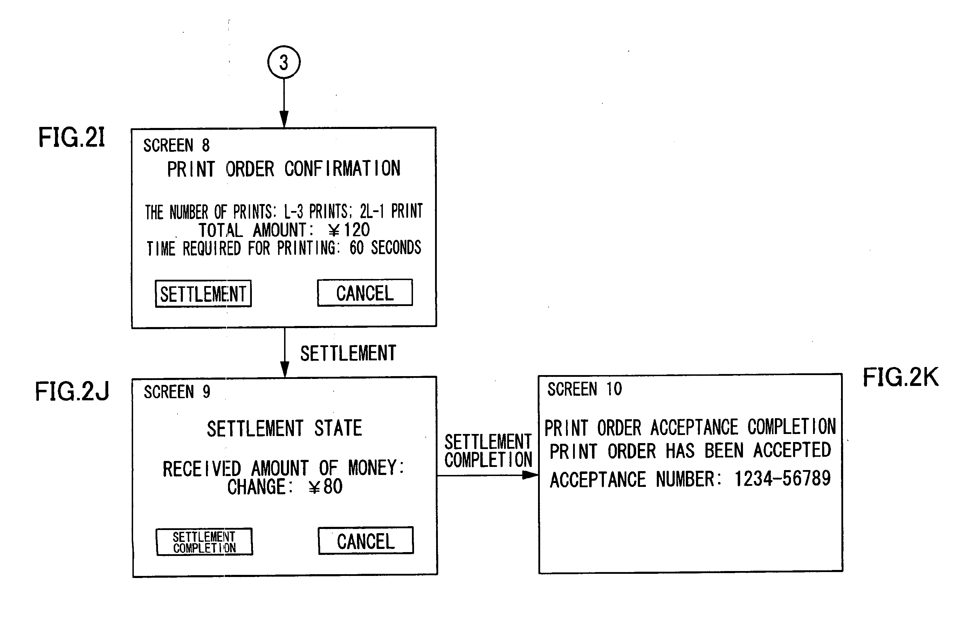

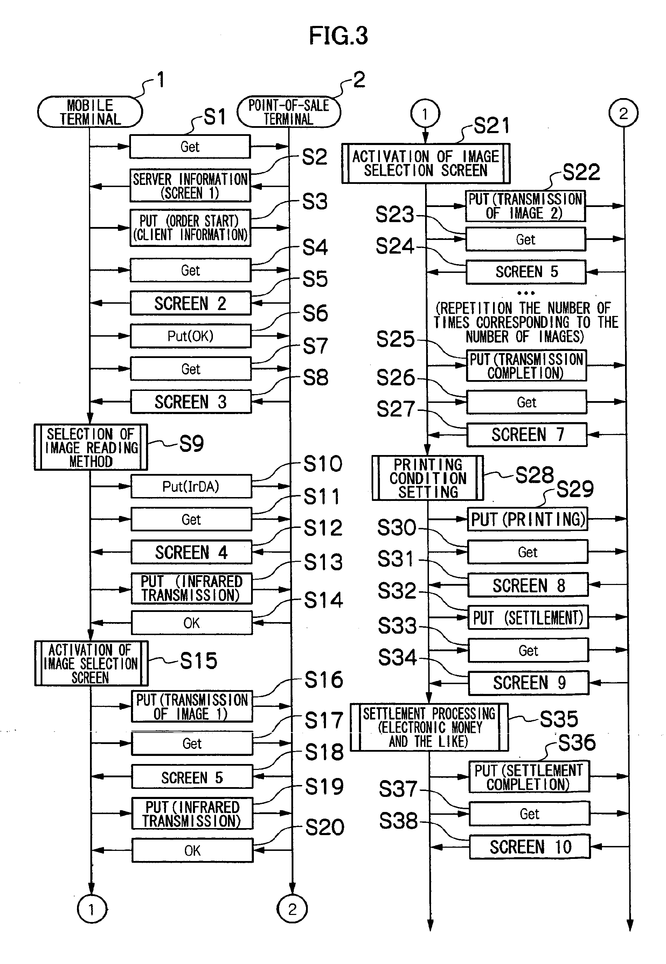

Next, transition of the screen for accepting input of the order information will be described with reference to Figs. 2A to 2K, and the flow of the processing by the printing system corresponding to the screen transition will be described with reference to Fig. 3.

First, at S1, when recognizing a particular point-of-sale terminal 2 via infrared communication, the mobile terminal 1 requests the point-of-sale terminal 2 to transmit service information and an information-about-possible-order screen (screen 1).

For example, the service information includes the following information.
- Printable print size and paper kind
- Unit price
- Delivery deadline (estimation of time required for acquisition of prints: printing time per print)
- Remaining number of sheets; information about whether paper is out or not
- Campaign information

At S2, the point-of-sale terminal 2 which has received the request sends the service information and the screen 1 to the mobile communication terminal via infrared communication.

At S3, when receiving the service information and the screen 1, the mobile terminal 1 displays the screen 1. As shown in Fig. 2A, the print size, the paper kind and the remaining number of sheets are displayed as the service information on this screen. By selecting an "order start" button on this screen 1, the flow proceeds to S4.

At S4, from the mobile terminal 1 to the point-of-sale terminal 2, client information is transmitted, and transmission of a print order start screen (screen 2) is requested. For example, the client information includes the following information.
- Model name (model number)
- Screen size
- Display language
- User information (such as age and age group)
- Payment method (with or without an electronic money function)
- Delivery destination (if delivery is necessary)

At S5, the point-of-sale terminal 2 receives the client information. A user interface such as a screen and an order acceptance processing program corresponding to each client information is prepared in the point-of-sale terminal 2 in advance, and the point-of-sale terminal 2 reads a user interface and a program corresponding to the client information which it has actually received. Then, the program corresponding to the client information is executed, and the point-of-sale terminal 2 which has received the request sends a user interface corresponding to the client information to the mobile terminal 1. Thereby, it is possible to provide a user interface customized in accordance with the specifications of the mobile terminal 1 and the attributes of the user of the mobile terminal 1, from the point-of-sale terminal 2 to the mobile terminal 1.

Hereinafter, it is assumed that the screens, the program and other information sent by the point-of-sale terminal 2 to the mobile terminal 1 are in conformity with the specifications of the mobile terminal 1 shown in the client information.

When receiving the screen 2 from the point-of-sale terminal 2, the mobile terminal 1 causes the screen display to turn to the screen 2.

As shown in Fig. 2B, the screen 2 includes the client information received by the point-of-sale terminal 2.

At S6, the mobile terminal 1 receives selection of an "OK" button on the screen 2, and proceeds to S7.

At S7, a request is made for transmission of an image reading screen (screen 3) from the point-of-sale terminal 2.

At S8, the point-of-sale terminal 2 which has received the request transmits the screen 3 to the mobile terminal 1.

At S9, the mobile terminal 1 receives the screen 3 and causes the screen display to turn to the screen 3.

As shown in Fig. 2C, the user can arbitrarily select the kind of the source to acquire image data from, on this screen 3.

At S 10, the mobile terminal 1 accepts selection of any of the buttons "IrDA", "SD", "xD" and the like indicating the kind of the source to acquire image data from, on the screen 3. When "IrDA" is selected, the flow proceeds to S11.

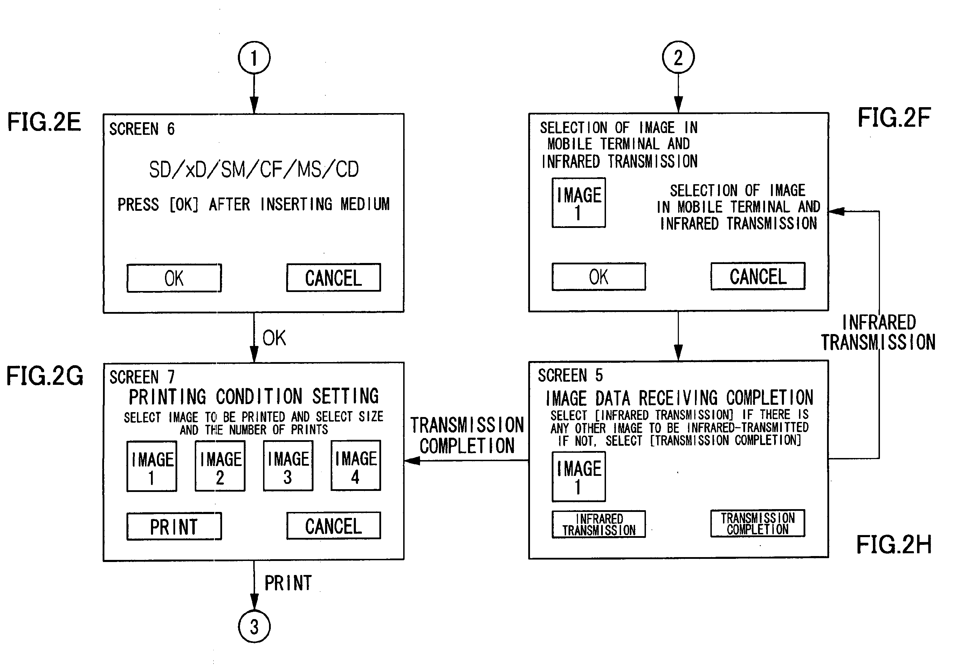

When any button other than the "IrDA" button is selected, a medium insertion screen (screen 6) is downloaded and displayed. Fig. 2E shows a display example of the screen 6. The processing flow corresponding to the screen 6 is not shown and is omitted. On this screen, by selecting the "OK" button after setting a medium from which an image is to be read, for the media reader 22, the media reader 22 reads the image data from the medium to the order acceptance device 21.

At S1 11, the mobile terminal 1 requests the point-of-sale terminal 2 to transmit an IrDA screen (screen 4).

At S12, the point-of-sale terminal 2 which has received the request transmits the screen 4 to the mobile terminal 1.

At S 13, the mobile terminal 1 receives the screen 4 and causes the screen display to turn to the screen 4. As shown Fig. 2D, a message indicating that the user can arbitrarily select the kind of the source to acquire image data from is displayed on this screen 4. When the "infrared transmission" button is selected on the screen 4, the mobile terminal 1 requests an image selection screen from the point-of-sale terminal 2.

At S 14, the point-of-sale terminal 2 sends the image selection screen to the mobile terminal 1.

At S 15, when receiving the image selection screen from the point-of-sale terminal 2, the mobile terminal 1 causes the screen display to turn to the image selection screen.

Fig. 2F shows the image selection screen. On this screen, an image to be sent from the mobile terminal 1 to the point-of-sale terminal 2 via infrared communication can be arbitrarily selected. The details are not shown and are omitted. Any method is possible as the method for selecting an image, and various methods are conceivable, such as selection of a thumbnail image and selection of a directory storing an image. When selection of an image ends, transmission of the selected image starts by selecting the "OK" button. Here, it is assumed that an "image 1" has been selected.

At S16, in response to the selection of the "OK" button, the mobile terminal 1 transmits the selected image to the point-of-sale terminal 2 via infrared communication. The transmission of the image data can be performed similarly to the case of direct printing of the conventional technique.

At S 17, after completion of the transmission of the image, the mobile terminal 1 requests the point-of-sale terminal 2 to transmit an image data receiving completion screen (screen 5) indicating that receiving of the image has completed.

At S 18, when receiving the screen 5, the mobile terminal 1 causes the screen display to turn to the screen 5.

As shown in Fig. 2H, any of an "infrared communication" button for further transmitting an image from the mobile terminal 1 or a "transmission completion" button for completing image transmission can be arbitrarily selected on the screen 5.

At S19, the mobile terminal 1 accepts selection of the "infrared communication" button or the "transmission completion" button. Here, for convenience of the description, it is assumed that the "infrared communication" button is selected to further transmit an image, and the flow proceeds to S20. However, it is naturally possible to transmit only one image and then select the "transmission completion" button on the screen 5.

At S20, the point-of-sale terminal 2 sends the image selection screen to the mobile terminal 1.

At S21, when receiving the image selection screen from the point-of-sale terminal 2, the mobile terminal 1 causes the screen display to turn to the image selection screen.

At S22, the mobile terminal 1 accepts selection of an image through the image selection screen. Here, it is assumed that an "image 2" has been selected.

At S23, the mobile terminal 1 transmits the selected image to the point-of-sale terminal 2.

At S24, after completion of the transmission of the image, the mobile terminal 1 requests the point-of-sale terminal 2 to transmit the image data receiving completion screen (screen 5) indicating that image receiving has completed.

At S25, when receiving the screen 5, the mobile terminal 1 causes the screen display to turn to the screen 5.

In the case of further transmitting an image, the processing from S 15 to S 19 is repeated the number of times corresponding the number of necessary images. Here, for simplification of the description, it is assumed that the "transmission completion" button is selected on the screen 5 after the image 2 is sent.

At S26, in response to the selection of the "transmission completion" button on the screen 5, the mobile terminal 1 requests the point-of-sale terminal 2 to transmit a "printing condition setting" screen (screen 7).

At S27, in response to the request from the mobile terminal 1, the point-of-sale terminal 2 transmits the screen 7.

At S28, when receiving the screen 7 from the point-of-sale terminal 2, the mobile terminal 1 causes the screen display to turn to the screen 7.

As shown in Fig. 2G, conditions required for printing each image, such as an image to be printed, the print size and the number of prints, can be freely set on the screen 7. By determining these conditions and pressing a "printing" button, the contents of the order information are determined.

At S29, the mobile terminal 1 sends the order information determined on the screen 7 to the point-of-sale terminal 2.

At S30, after completion of the transmission of the order information, the mobile terminal 1 requests transmission of a print order confirmation screen (screen 8).

At S31, in response to the request from the mobile terminal 1, the point-of-sale terminal 2 transmits the screen 8.

At S32, when receiving the screen 8 from the point-of-sale terminal 2, the mobile terminal 1 causes the screen display to turn to the screen 8.

As shown in Fig. 2I, the number of prints, which is the contents of the order information actually received by the point-of-sale terminal 2 from the mobile terminal 1, the total amount, which is the price for the prints corresponding to the order information, and the time required for printing (the shortest scheduled arrival time in the case of delivery) are shown on the screen 8. A "settlement" button for instructing start of settlement of the price for the prints is also prepared. The mobile terminal 1 accepts selection of the "settlement" button.

At S33, in response to the selection of the "settlement" button, the mobile terminal 1 transmits information required for settlement of the price for the prints. For example, if the mobile terminal 1 is provided with an electronic money function, user identification information given by a server for managing the balance of electronic money is sent. When the transmission of the settlement information completes, the mobile terminal 1 requests the point-of-sale terminal 2 to transmit a settlement state screen (screen 9).

At S34, when receiving the settlement information, the point-of-sale terminal 2 transmits the settlement state screen (screen 9) for causing final confirmation of settlement of the price for the prints to be performed, to the mobile terminal 1.

At S35, when receiving the screen 9 from the point-of-sale terminal 2, the mobile terminal 1 causes the screen display to turn to the screen 9.

As shown in Fig. 2J, the screen 9 includes information for confirming the contents of settlement. A "settlement completion" button for instructing completion of settlement of the price for the prints is also prepared.

At S36, in response to selection of the "settlement completion" button, the mobile terminal 1 instructs the point-of-sale terminal 2 to perform settlement of the price for the prints. In response to the instruction from the mobile terminal 1, the point-of-sale terminal 2 executes settlement of the price for the prints. However, the point-of sale terminal 2 itself does not necessarily have to execute the settlement processing, and the settlement processing may be performed by an external server.

When the settlement completes, the order acceptance device 21 of the point-of-sale terminal 2 sends a direction to print the specified number of sheets of the specified images in the specified size in accordance with the order information, to the printer 23. The printer 23 prints the images in accordance with this direction.

At S37, when the settlement and the printing complete, the mobile terminal 1 requests transmission of a print order acceptance completion screen (screen 10).

At S38, in response to the request from the mobile terminal 1, the point-of-sale terminal 2 transmits the screen 10. When receiving the screen 10 from the point-of-sale terminal 2, the mobile terminal 1 causes the screen display to turn to the screen 10.

As shown in Fig. 2K, the screen 10 shows that acceptance of the print order has ended, together with a specific acceptance number given to the order information.

As described above, in this system, the mobile terminal 1 can acquire and display the contents of services different from point-of-sale terminal 2 to point-of-sale terminal 2 as service information. Therefore, the user can confirm, in advance, the service provision state which may differ depending on point-of-sale terminals 2 by looking at the service information displayed on the screen of the mobile terminal 1, without operating the point-of-sale terminal 2 nor asking a clerk questions.

For example, the user can know whether a point-of-sale terminal 2 can print the size he desires by confirming the printable size and can know whether all of the number of prints he desires is printable by confirming the remaining number of sheets of each size.

Then, the user can freely select through the operation device of the mobile terminal 1 whether or not to place an order to the point-of-sale terminal 2 and what contents the order should include if the order is to be placed, depending on the confirmed contents of the services of the point-of-sale terminal 2.

The service information is displayed on the screen of the mobile terminal 1, and the order information can be inputted from the mobile terminal 1. Therefore, it is not necessary to provide a screen for displaying the service information for the point-of-sale terminal 2 nor an operation device for inputting the order information, and cost down of the point-of-sale terminal 2 can be expected. Furthermore, there is little possibility that the contents of an image or the contents of a print order is known by others, unlike the conventional case where information is displayed on the large screen of a point-of-sale terminal and others may look into the screen.

Furthermore, since the service information delivered from a server can be changed by a point-of-sale terminal 2, placement of a print order and provision of a print order screen, corresponding to the contents of services different from point-of-sale terminal 2 to point-of-sale terminal 2, can be considerably facilitated, unlike the conventional direct printing.

## Claims

1. A printing system including: a printing terminal (2) provided with an image input section (21, 22) which accepts input of an image, an order receiving section (21) which receives order information about order of a print of the image, a settlement section which performs settlement processing in accordance with the order information, a print data creation section which creates print data for printing the image in accordance with the order information received by the order receiving section, and a printer (23) which creates a photo print of the image in accordance with the print data; and a communication terminal (1a, 1b) provided with an order acceptance section which accepts input of the order information, and an order transmission section which transmits the order information inputted to the order acceptance section, to the order receiving section, the printing system **characterized by** comprising:
an information communication section (21) which transmits service information, which is information about services provided by the printing terminal (2), to the communication terminal (1a, 1b), and
wherein when receiving the service information from the information communication section, the communication terminal (1a, 1b) displays the received service information.

2. The printing system according to claim 1, wherein
the communication terminal (1a, 1b) transmits client information including information about the standard of a user interface which accepts the input of the order information, to the information communication section (21),
when receiving the client information from the communication terminal (1a, 1b), the information communication section transmits a user interface corresponding to the services provided by the printing terminal (2) and corresponding to the client information, to the communication terminal (1a, 1b), and
the communication terminal (1a, 1b) receives the user interface for the order information from the information communication section (21), and the order acceptance section accepts the input of the order information via the user interface.

3. The printing system according to claim 1 or 2, wherein the printing terminal (2) is provided with the information communication section (21).

4. A printing terminal **characterized by** comprising:
a printing unit (2) provided with an image input section (21, 22) which accepts input of an image, an order receiving section (21) which receives order information about order of a print of the image from a communication terminal (1a, 1b), a settlement section which performs settlement processing in accordance with the order information, a print data creation section which creates print data for printing the image in accordance with the order information received by the order receiving section (21), and a printer (23) which creates a photo print of the image in accordance with the print data;
a communication terminal (1a, 1b) provided with an order acceptance section which accepts input of the order information, and an order transmission section which transmits the order information inputted to the order acceptance section, to the order receiving section (21); and
an information communication section which transmits service information, which is information about services provided by the printing unit (2), to the communication terminal (1a, 1b).

5. A print service method, comprising the steps of:
transmitting service information, which is information about services provided by a printing terminal (2), from a server to a communication terminal (1a, 1b); and
receiving the service information from the server and causing the received service information to be displayed, at the communication terminal (1a, 1b).
